# EUROPÄISCHE PATENTSCHRIFT

(11) **EP 2 342 801 B1**
(45) Veröffentlichungstag und Bekanntmachung des Hinweises auf die Patenterteilung: **20.02.2013**
(21) Anmeldenummer: 09799487.5
(22) Anmeldetag: 22.10.2009
(51) Int. Cl.: H02K 1/14, H02K 1/16, H02K 15/06, H02K 21/24

(54) **TRANSVERSALFLUSSMOTOR ALS AUSSENLÄUFERMOTOR UND ANTRIEBSVERFAHREN**
OUTER ROTOR TYPE TRANSVERSE FLUX MOTOR AND DRIVING METHOD
MOTEUR A FLUX TRANSVERSAL DU TYPE A ROTOR EXTERNE ET SON PROCÉDÉ DE COMMANDE

(30) Priorität: 30.10.2008 DE 102008053895; 15.05.2009 DE 102009021540
(43) Veröffentlichungstag der Anmeldung: 13.07.2011
(73) Patentinhaber: Leantec Motor GmbH & Co. KG, 07318 Saalfeld (DE)
(72) Erfinder: SCHMIDT, Michael, 08459 Neukirchen OT Dänkritz (DE)
(74) Vertreter: Steiniger, Carmen
(86) Internationale Anmeldenummer: PCT/DE2009/001492
(87) Internationale Veröffentlichungsnummer: WO 2010/048928

(56) Entgegenhaltungen:
- EP-A2- 1 953 902
- WEH H: "DIE TRANSVERSALFLUSSMASCHINE. THE TRANSVERSE FLUX MACHINE", JAHRBUCH DER SCHIFFBAUTECHNISCHEN GESELLSCHAFT, BERLIN, DE, Bd. 86, 1. Januar 1992 (1992-01-01), Seiten 68-73, XP002043271, ISSN: 0374-1222

## Beschreibung

Die vorliegende Erfindung betrifft einen Transversalflussmotor, in einer Ausführung als Außenläufermotor, mit wenigstens einem Stator und wenigstens einem Rotor, wobei magnetisch aktive Elemente des Stators ringförmig und mit einem U-förmigen Innenprofil an dem Stator ausgebildet sind und der Rotor scheiben- oder ringförmig ausgebildet ist, wobei der Rotor magnetisch aktive Stege aufweist, die ringförmig in radialer Ausrichtung auf wenigstens einer Stirnfläche des Rotors vorgesehen sind. Die vorliegende Erfindung betrifft ferner ein Antriebsverfahren nach dem Transversalflussprinzip, wobei magnetisch aktive Stege wenigstens eines scheiben- oder ringförmigen Rotors, die ringförmig in radialer Ausrichtung auf wenigstens einer Stirnfläche des Rotors angeordnet sind, mit ringförmig an wenigstens einem Stator vorgesehenen magnetisch aktiven Elementen mit einem U-förmigen Innenprofil zusammenwirken, um den Rotor in Rotation zu versetzen.

Vorteilhafte Eigenschaften von Transversalflussmotoren, wie beispielsweise die Erzeugung großer Kräfte bei geringer Masse der Motoren, sind schon seit einigen Jahren bekannt. Beispielsweise wurden in dem Aufsatz von Herbert Weh in dem Jahrbuch der Schiffbautechnischen Gesellschaft, Band 86, 01.01.1992, Seiten 68 bis 73, ISSN 0374-1222 Vorzüge von Transversalflussmotoren anhand von Ausführungsbeispielen beschrieben. Die vorgeschlagenen Motorenkonzepte sind relativ aufwändig aufgebaut und deshalb nicht für eine industrielle Fertigung ausgereift.

Ein Antriebsverfahren der oben genannten Gattung ist aus der Druckschrift EP 1 720 236 A1 bekannt. Diese Druckschrift offenbart einen geräuscharmen, modularen Direktantrieb nach dem Reluktanzprinzip. Der Direktantrieb weist einen im Querschnitt ringförmigen Rotor mit radialen Nuten an beiden Stirnseiten auf. Ferner besitzt der bekannte Direktantrieb einen aus U-förmigen Platten zusammengesetzten Statorring. Die U-Platten sind entweder so zusammengesetzt, dass sich die U-förmigen Innenprofile der U-Platten im Statorring radial nach innen oder radial nach außen öffnen. In einer Ausführungsvariante der Druckschrift EP 1 720 236 A 1 ist der Rotorring innerhalb der U-förmigen Innenprofile der U-Platten des Statorringes so angeordnet, dass er innerhalb des Statorringes rotieren kann (Innenläufer). In einer anderen Ausführungsvariante, in der die U-Platten des Statorringes nach außen radial geöffnet sind, ist der Rotorring so zwischen den U-förmigen Innenprofilen eingepasst, dass er außen am Statorring rotieren kann (Außenläufer). Bei beiden Ausführungsvarianten sind Stator- und Rotorring räumlich um 90° zueinander versetzt angeordnet.

In der in der Druckschrift EP 1 720 236 A 1 beschriebenen Reluktanzmaschine wirken die radial ausgerichteten U-Platten des Stators aus weichmagnetischem Material als Statorzähne, während die Radialnuten des Rotors aus weichmagnetischem Material als Rotorzähne dienen. Die Statorzähne sind mit Spulen bewickelt, die abwechselnd einund ausgeschaltet werden. Die Zähne mit den bestromten Wicklungen ziehen jeweils die nächstgelegenen Zähne des Rotors elektromagnetisch an und werden abgeschaltet, wenn oder kurz bevor die Zähne des Rotors den sie anziehenden Statorzähnen gegenüberstehen. In dieser Position wird die nächste Phase auf anderen Statorzähnen eingeschaltet, die andere Rotorzähne anzieht. Auf diese Weise wird der Rotor in Rotationsrichtung bewegt.

Da sich bei der bekannten Ausführungsform relativ kleine Polteilungen realisieren lassen, sind hohe spezifische Drehmomente erzielbar. Darüber hinaus wird bei der bekannten Anordnung der Kraftflussweg für die pulsierenden Anzugskräfte zwischen Stator und Rotor auf kurzem Wege geschlossen und es bestehen vorteilhafte Symmetriebedingungen zwischen Stator und Rotor, um diese Kräfte in ihrer Wirkung auf Stator und Rotor möglichst zu kompensieren. Entsprechend kann eine relativ geringe Geräuschemission erreicht werden.

Um ein weitgehend konstantes Drehmoment in allen Rotorstellungen zu erzielen, schlägt die Druckschrift EP 1 720 236 A 1 ferner vor, eine Mindestanzahl von drei separaten Strängen, das heißt, drei phasenverschoben elektrisch gespeisten Statorwicklungen, vorzusehen, was durch axiale Reihenanordnung von drei Maschinen realisiert werden kann.

Soll bei der bekannten Anordnung ein möglichst kleiner, durchgehend gleichbleibender Luftspalt zwischen Stator und Rotor erzielt werden, müssen insbesondere die U-förmigen Innenprofile der U-Platten des Stators sehr genau gefertigt werden. Der Hohlzylinder des Rotors ist exakt in den Zwischenraum zwischen den U-förmigen Innenprofilen der U-Platten einzupassen. Dies bedeutet einen erheblichen technologischen Aufwand. Auch ist davon auszugehen, dass sich im Verlauf der Verwendung der bekannten Reluktanzmaschine, insbesondere durch deren Verschleiß, Varianzen in der Luftspaltgröße ergeben, wodurch Änderungen im Wirkungsgrad der bekannten Reluktanzmaschine auftreten können. Zudem sind bei der bekannten Reluktanzmaschine sowohl die U-Platten als auch der für den Rotor verwendete Hohlzylinder aus weichmagnetischem Material ausgebildet, wodurch der Direktantrieb relativ schwer ist und sich für viele Einsatzmöglichkeiten, wie beispielsweise direkt an den Rädern eines Fahrzeugs, nicht eignet.

Es ist daher die Aufgabe der vorliegenden Erfindung, einen Direktantrieb auf Basis des Transversalflussprinzips bereit zu stellen, mit dem ein hohes Drehmoment bei gleichzeitig möglichst geringem Gewicht, hoher Zuverlässigkeit und möglichst gleichbleibender Effektivität des Direktantriebs zur Verfügung gestellt werden kann, der sowohl nach dem Reluktanzprinzip als auch als Permanentmagnet erregte Synchronmaschine, die eine noch höhere Leistungsdichte erreicht, arbeiten kann.

Diese Aufgabe wird durch einen Transversalflussmotor der oben genannten Gattung gelöst, bei welchem senkrechte Profilseiten des U-förmigen Innenprofils parallel zur axialen Ausrichtung des Stators ausgerichtet sind und freie Enden der senkrechten Profilseiten des U-förmigen Innenprofils voneinander beabstandete Pole aufweisen, wobei der der Rotor mit einem rotierbaren Motorkäfig bzw. einer Motorhülle verbunden ist und der Stator mit einem fest stehenden Träger oder einer fest stehenden Achse verbunden ist. Der Motorkäfig ist hierbei ein außen liegendes Rotationselement bzw. ein außen rotierendes Bauteil, beispielsweise eine Walze oder Felge, mit welchem der Rotor rotiert. Im Ergebnis wird ein Außenläufermotor zur Verfügung gestellt, der innen feststehend ist und bei welchem das äußere Teil, das heißt der Motorkäfig, des Motors rotierend ist.

Bei der erfindungsgemäßen Lösung ist der wenigstens eine Stator somit parallel zu dem wenigstens einen Rotor ausgerichtet, wobei eine Stirnseite des Stators einer Stirnseite des Rotors direkt gegenüber ist. Auf diese Weise kann mit einfachen technologischen Mitteln ein sehr genauer Luftspalt zwischen Stator und Rotor eingestellt werden, wodurch ein hoher Wirkungsgrad und eine kontinuierlich gleichbleibende Effektivität des Transversalflussmotors bereitgestellt werden kann. Bedingt durch die damit erzielbare vorteilhafte Symmetrie zwischen Stator und Rotor können Geräuschemissionen weitgehend minimiert werden, ohne das Gewicht der Anordnung erhöhen zu müssen. Zudem können durch die ringförmigen Anordnungen der magnetisch aktiven Elemente am Stator der magnetisch aktiven Stege am Rotor eine Vielzahl von Polen ausgebildet werden, wodurch hohe spezifische Drehmomente erzielt werden können.

In einer bevorzugten Ausgestaltung der Erfindung sind bei ansonsten identischer Bauweise die Zähne des Rotors aus weichmagnetischem Werkstoff (Reluktanzmaschine) oder aus Permanentmagneten (permanentmagneterregte Synchronmaschine) ausgebildet. Damit bietet der als Außenläufermotor ausgebildete erfindungsgemäße Motor optimale Voraussetzungen für den Einsatz als innen liegender Walzenantrieb oder als Radantrieb.

Es ist besonders vorteilhaft, wenn die Rotorstege aus permanentmagnetischem Material bestehen und damit den Betrieb der vorliegenden Erfindung als permanentmagneterregte Synchronmaschine erlauben. Während beim Reluktanzmotor die Rotationsbewegung nur durch elektromagnetisch erzeugte Zugkräfte zustande kommt, können bei der permanentmagneterregten Synchronmaschine Zug- und Schubkräfte genutzt werden, was in einer höheren Leistungsdichte resultiert. Darüber hinaus sind bei einer erfindungsgemäßen permanentmagneterregten Synchronmaschine 2 Phasen ausreichend, um eine kontinuierliche Rotationsbewegung zu erzeugen.

In einer vorteilhaften Ausführungsform der vorliegenden Erfindung weisen die senkrechten Profilseiten des U-förmigen Innenprofils in radialer Ausrichtung des Stators einen Abstand auf, der etwa der Länge der radialen Ausdehnung der Stege am Rotor entspricht. Somit können auf geeignete Weise die Pole von Stator und Rotor miteinander in Deckung gebracht werden, um eine effektive Rotation des Rotors zu ermöglichen.

In einem bevorzugten Beispiel der vorliegenden Erfindung weist der Stator drei, vier oder mehr gleichmäßig am Stator angeordnete und voneinander gleichmäßig beabstandete, als Ringe oder Ringsegmente ausgebildete magnetisch aktive Elemente auf. In den Ringsegmenten können jeweils eine Vielzahl von magnetisch aktiven Polen zusammengefasst werden und gemeinsam mit einer oder mehreren Wicklungen versehen werden, sodass eine Mehrzahl von Polen gleichzeitig bestromt werden kann, um verschiedene Phasen zu erzeugen. Dies bedeutet, dass es möglich ist, mehrere Phasen pro Ring anzuordnen oder auch nur eine Phase pro Ring.

Hierbei ist es besonders günstig, wenn die Ringe oder Ringsegmente mit einer Phasenverschiebung zueinander verstrombar sind. Somit können die drei, vier oder mehr Ringsegmente sequentiell, paarweise oder in einer anderen geeigneten Abfolge oder Gruppierung bestromt werden, um den Rotor in Rotation zu versetzen.

In einer besonders günstigen Ausführungsvariante der vorliegenden Erfindung sind die Pole zahnartig ausgebildet, wobei jedem Pol auf einer senkrechten Profilseite eines Ringsegmentes ein Pol auf der anderen senkrechten Profilseite des Ringsegmentes in radialer Ausrichtung des Stators gegenüber ist. Somit wird durch die jeweils gegenüber angeordneten Pole ein separates U-Profil ausgebildet, das gegenüber einem Steg an dem Rotor angeordnet und mit diesem in Deckung gebracht werden kann, um den Rotor geeignet anzutreiben.

In einem bevorzugten Beispiel der vorliegenden Erfindung ist der Transversalflussmotor sandwichartig ausgebildet, wobei ein Rotor zwischen einem ersten und einem zweiten Stator derart angeordnet ist, dass jede der Stirnflächen des Rotors einer Statorstirnfläche mit davon axial, in Richtung des Rotors hervor ragenden Ringsegmenten gegenüber ist. Die sandwichartige Ausbildung bietet den Vorteil, dass dann, wenn die zwei Statoren gleichartig bestromt werden, ein Kräfteausgleich stattfindet, da axial- und radialsymmetrische Belastungen an einer solchen Struktur ausgeglichen werden. Entsprechend kann ein besserer Gleichlauf des erfindungsgemäßen Transversalflussmotors erzielt werden.

Es ist besonders von Vorteil, wenn auf dem ersten Stator und auf dem zweiten Stator jeweils vier gleiche Ringsegmente vorgesehen sind, wobei die Statoren so angeordnet sind, dass sich die Ringsegmente jeweils gegenüber sind, und wobei die Ringsegmente so mit einer Phasenverschiebung von 180° bestrombar sind, dass jeweils gegenüberliegende Ringsegmente bestromt sind. Hierdurch lässt sich auf einfache anschlusstechnische Weise ein geeigneter axial- und radial symmetrischer Kräfteausgleich zwischen den Statoren und dem Rotor des erfindungsgemäßen Transversalflussmotors erzielen. Bei dieser Anordnung wirken pro Phase vier Ringsegmente auf eine Rotorscheibe bzw. einen Rotorring. Entsprechend wirkt bei gleicher Polzahl aufgrund der beidseitigen Anordnung die doppelte Zahl von Polen auf den Rotor, was einen größeren Fluss und damit ein höheres Drehmoment zur Folge hat.

In einer weiteren favorisierten Ausführungsvariante der vorliegenden Erfindung weist der Transversalflussmotor mehrere, gestapelte sandwichartige Stator-Rotor-Stator-Anordnungen auf. Durch diese Ausführungsform ist ein besonders großes Drehmoment erreichbar. Zusätzlich eröffnet diese Ausführungsvariante die Möglichkeit, die Stapelebenen der gestapelten Sandwichstrukturen unterschiedlich zu bestromen, sodass bei einer geeigneten, sequentiellen Bestromung der einzelnen Stapelebenen ein besonders hoher Wirkungsgrad des erfindungsgemäßen Transversalflussmotors erzielt werden kann. Durch die Erweiterung auf mehrere Stapelebenen kann neben einer direkt proportionalen Drehmomenterhöhung, eine Verbesserung der Positionierbarkeit, ein besserer Gleichlauf und eine Verringerung des Maximalstroms trotz proportionalem Leistungsanstieg erreicht werden.

In einer vorteilhaften Weiterbildung der vorliegenden Erfindung weist der Stator einen Träger aus einem nicht magnetischen Material auf und die Ringsegmente sind ausweichmagnetischem Material ausgebildet. Somit lässt sich das Gewicht des Stators stark reduzieren, wodurch sich die Einsatzmöglichkeiten für den erfindungsgemäßen Transversalflussmotor, insbesondere für Antriebskonfigurationen im Fahrzeugbereich, bedeutend erhöhen.

Gemäß einer bevorzugten Variante der Erfindung ist der Träger aus einem Faserverbundwerkstoff ausgebildet. Beispielweise kann ein glasfaserverstärkter Faserverbundwerkstoff eingesetzt werden. Solche Trägerwerkstoffe besitzen den Vorteil, dass sie ein sehr geringes Gewicht besitzen und damit für den erfindungsgemäßen Transversalflussmotor eine bessere Dynamik zur Verfügung stellen. Ferner lassen sich mit derartigen Materialien glatte Scheiben bzw. Ringe herstellen, wodurch der Luftwiderstand geringer wird und der erfindungsgemäße Transversalflussmotor leiser wird. Faserverbundwerkstoffe, wie CFK oder AFK vermeiden magnetische Nebenschlüsse, da die Bewegungsenergie eine Funktion der Differenz des Flusses zwischen ausgerichtetem und nicht ausgerichtetem Zustand ist, was eine Drehmomenterhöhung zur Folge hat. Ferner können durch den Einsatz von Faserverbundwerkstoffen als Trägermaterialien für den Stator gezielt Beeinflussungen der Eigenschaften der Statorscheibe bzw. des Statorringes, wie der Elastizität und/oder des Schwingungsverhaltens, erlaubt werden.

Es hat sich zudem als besonders vorteilhaft erwiesen, wenn wenigstens eines der Ringsegmente aus mehreren Einzelsegmenten zusammengesetzt ist. Die Einzelsegmente können auf einfache technologische Weise hergestellt werden und daraufhin geeignet auf dem Stator zu einem Ringsegment zusammengesetzt werden. Hierdurch können die Technologiekosten zur Herstellung des erfindungsgemäßen Transversalflussmotors verringert und die Genauigkeit der Ausbildung der Ringsegmente verbessert werden.

Gemäß einer weiteren bevorzugten Ausführungsform der vorliegenden Erfindung weist der Stator wenigstens eine innen hohle Wicklung auf. Die innen hohle Wicklung kann neben ihrer Spulenfunktion an dem erfindungsgemäßen Transversalflussmotor genutzt werden, um den Transversalflussmotor während seines Betriebs zu kühlen, da durch die innen hohle Wicklung eine Kühlflüssigkeit geleitet werden kann.

In einer besonders bevorzugten Variante der Erfindung ist die innen hohle Wicklung aus Kupferrohr ausgebildet. Dieses eignet sich besonders gut, um die gewünschten elektromagnetischen Eigenschaften des Transversalflussmotor zur Verfügung zu stellen und darüber hinaus als Kühlmechanismus eingesetzt zu werden, indem durch das innen hohle Kupferrohr eine Kühlflüssigkeit geleitet wird.

In einem günstigen Ausführungsbeispiel der Erfindung wird durch die Verbindung des Stators mit einem U-förmigen Träger eine freie Rotation um die Rotationsachse ermöglicht.

In einer vorteilhaften Weiterbildung der Erfindung werden der Statorträger, die Stator-Ringsegmente und die Leiterwicklung, beispielsweise durch Verguss oder ein Laminierverfahren unter Nutzung elektrisch nicht leitender Bindemittel zu einem Statorblock zusammengefasst. Dadurch wird die mechanische Robustheit des Stators erhöht, das Schwingungsverhalten verbessert und eine optimale Fixierung und Isolation der Leiterwicklung erreicht. Zudem wird dadurch der Montageaufwand verringert.

Die Aufgabe der vorliegenden Erfindung wird ferner durch ein Antriebsverfahren der oben genannten Gattung gelöst, bei welchem die magnetisch aktiven Elemente an dem Stator wenigstens drei Ringe oder Ringsegmente sind, die unterschiedlich bestromt werden, wobei senkrechte Profilseiten des U-förmigen Innenprofils der Ringsegmente parallel zur axialen Ausrichtung des Stators ausgerichtet sind und freie Enden der senkrechten Profilseiten des U-förmigen Innenprofils voneinander beabstandete Pole aufweisen, und wobei bei jeder Bestromung der Rotor in Relation zu dem Stator um einen Pol in Rotationsrichtung bewegt wird.

Bei dem erfindungsgemäßen Antriebsverfahren kann der Stator flächig dem Rotor gegenüber angeordnet werden. Das hat den Vorteil, dass der Luftspalt zwischen Stator und Rotor sehr gering eingestellt werden kann. Darüber hinaus lassen sich auf der scheiben- bzw. ringförmigen Oberfläche des Stators eine Vielzahl an Polen anordnen, sodass mit dem erfindungsgemäßen Antriebsverfahren ein hoher Wirkungsgrad und ein hohes Drehmoment erziel bar sind. Darüber hinaus lassen sich die wenigstens drei an dem Stator vorgesehen Ringe oder Ringsegmente auf einfache Weise unterschiedlich bestromen, sodass basierend auf dem erfindungsgemäßen Antriebsverfahren ein Antrieb zur Verfügung gestellt werden kann, der auf einfache Art und Weise elektrisch angeschlossen und betrieben werden kann.

In einer vorteilhaften Weiterbildung der vorliegenden Erfindung wird der Rotor sandwichartig zwischen einem ersten Stator mit vier Ringsegmenten und einem zweiten Stator mit vier Ringsegmenten angeordnet, die Ringsegmente des ersten und des zweiten Stators werden mit einer Phasenverschiebung von 180° bestromt werden und wobei die auf den Statoren gegenüberliegenden Ringsegmente gleich bestromt werden. Somit lässt sich eine symmetrische Stator-Rotor-Stator-Anordnung realisieren, bei welcher eine geeignete Kräftekompensation zwischen den Statoren und dem Rotor erfolgt. Auf diese Weise kann ein sehr ruhig laufender Transversalflussmotor mit hohem Wirkungsgrad zur Verfügung gestellt werden.

In einer besonders vorteilhaften Ausführungsform der vorliegenden Erfindung werden mehrere sandwichartig aufgebaute Stator-Rotor-Stator-Anordnungen als Stapelanordnung vorgesehen, wobei die Stapelebenen sequentiell mit einer Phasenverschiebung zueinander bestromt werden. Durch die Stapelanordnung ergibt sich eine Reihe von Kombinationsmöglichkeiten für die Schaltung der Anordnung. Entsprechend ist es möglich, jede der Stapelebenen der Stapelanordnung seltener zu schalten, aber durch die Kombination der Phasen, Pole und Ebenen der Stapelanordnung dennoch ein hohes Drehmoment bei dem erfindungsgemäßen Antriebsverfahren zu erzielen.

Es ist besonders günstig, wenn bei einer Anordnung, in der dem Rotor ein Stator gegenüber angeordnet und zugeordnet ist, der Stator wenigstens an drei, gleichmäßig an dem Stator angeordneten Ringen oder Ringsegmenten sequentiell bestromt wird. Die Bestromung an wenigstens drei Ringen oder Ringsegmenten, das heißt drei Phasen, sind mindestens notwendig, um eine kontinuierliche Drehbewegung bei dem erfindungsgemäßen Antriebsverfahren zu erzielen.

Es ist jedoch noch günstiger, wenn die minimale Anzahl der Phasen und damit der Ringe oder Ringsegmente des Stators drei + eins beträgt, um eine radial symmetrische Belastungsverteilung an dem Transversalflussmotor zu erreichen. In dieser Konfiguration ist es auch möglich, mehrere Phasen gleichzeitig zu bestromen, wodurch eine Erhöhung von Drehmoment und Leistung möglich wird.

Vorteilhafte Ausführungsformen der vorliegenden Erfindung werden im Folgenden anhand der Figuren der Zeichnung näher erläutert, wobei:
- Figur 1: schematisch in einer geschnittenen Seitenansicht ein gegenüber einem Rotorsteg angeordnetes magnetisch aktives Element eines Stators gemäß einer Ausführungsform des erfindungsgemäßen Transversalflussmotors zeigt, in welcher nur ein Stator und ein Rotor vorgesehen sind;
- Figur 2: schematisch in einer geschnittenen Seitenansicht einen zwischen zwei magnetisch aktiven Elementen von zwei Statoren angeordneten Rotorsteg gemäß einer weiteren Ausführungsform des erfindungsgemäßen Transversalflussmotors zeigt, bei welchem ein Rotor sandwichartig zwischen den zwei Statoren vorgesehen ist;
- Figur 3: schematisch in einer geschnittenen Seitenansicht eine Anordnung von Statoren und Rotoren gemäß einer weiteren Ausführungsform des erfindungsgemäßen Transversalflussmotors zeigt, welcher aus einer Stapelanordnung von sandwichartig zwischen Statoren vorgesehenen Rotoren ausgebildet ist;
- Figur 4: schematisch in einer perspektivischen Ansicht eine Ausführungsvariante eines Stators des erfindungsgemäßen Transversalflussmotors zeigt;
- Figur 5: schematisch in einer perspektivischen Ansicht eine Ausführungsvariante eines Rotors des erfindungsgemäßen Transversalflussmotors zeigt;
- Figur 6: schematisch in einer perspektivischen Ansicht eine weitere Ausführungsvariante des erfindungsgemäßen Transversalflussmotors zeigt, welcher eine Stapelanordnung aus zwei Sandwich-Stapelebenen aufweist;
- Figur 7: schematisch noch eine weitere Ausführungsform des erfindungsgemäßen Transversalflussmotors mit einer Stator-Rotor-Stator-Rotor-Stator-Sandwich-Anordnung in einer geschnittenen Seitenansicht zeigt;
- Figur 8: schematisch in einer perspektivischen Ansicht einen Stator gemäß einer Ausführungsvariante des erfindungsgemäßen Transversalflussmotors zeigt, wobei der Stator aus Einzelsegmenten aufgebaute Ringsegmente aufweist;
- Figur 9: schematisch in einer perspektivischen Ansicht einen Stator gemäß einer weiteren Ausführungsform des erfindungsgemäßen Transversalflussmotors mit innen hohlen Wicklungen zeigt;
- Figur 10: schematisch eine Ausführungsform des erfindungsgemäßen Antriebsverfahrens zeigt, wobei die Positionen von Rotorelementen zu Statorelementen für jede Phase in vier Hauptrotationslagen am Beispiel eines Transversalflussmotors mit vier sandwichartig aufgebauten Stator-Rotor-Stator-Anordnungen dargestellt sind;
- Figur 11: schematisch eine geschnittene Seitenansicht und einen Querschnitt des erfindungsgemäßen Transversalflussmotors als Außenläufermotor zeigt;
- Figur 12: schematisch eine Ausführungsform des Außenläufermotors mit einer Aufhängung und Lagerung, die beispielsweise Lenkbewegungen von 180 Grad zulässt, zeigt und
- Figur 13: schematisch die Möglichkeit der modularen Aneinanderreihung von Rotor-Stator-Anordnungen zeigt.

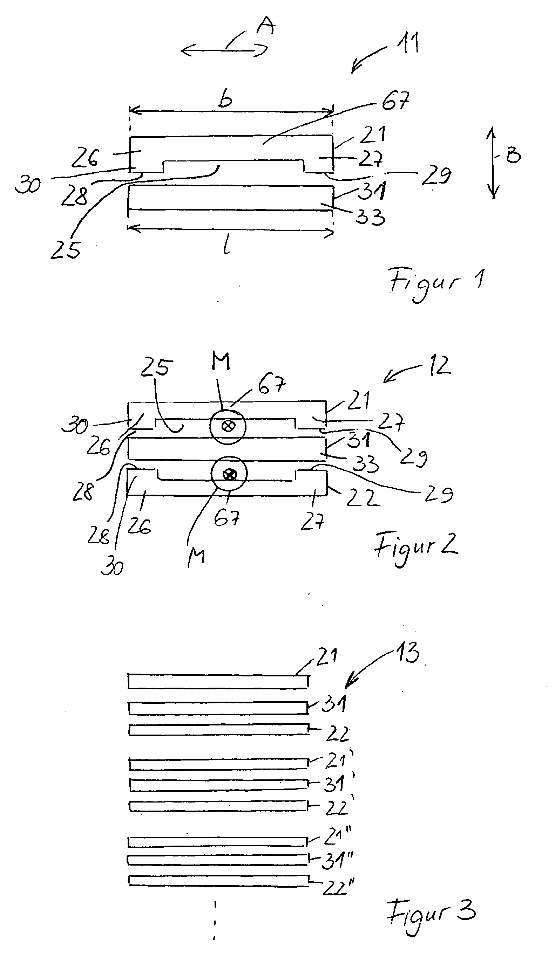

Fig. 1 zeigt schematisch ein Grundprinzip eines erfindungsgemäßen Transversalflussmotors 11 in einer geschnittenen Seitenansicht auf durch ein magnetisch aktives Element eines Stators 21 und einen magnetisch aktiven Steg 33 eines Stators 31.

Das magnetisch aktive Element des Stators 21 ist ringförmig an dem Stator 21 vorgesehen und weist im Querschnitt ein U-förmiges Innenprofil 25 auf. Die senkrechten Profilseiten 26, 27 des U-förmigen Innenprofils 25 sind parallel zur axialen Ausrichtung B des Stators 21 ausgerichtet. Der die senkrechten Profilseiten 26, 27 verbindende Quersteg 67 ist in radialer Ausrichtung A des Stators 21 ausgerichtet.

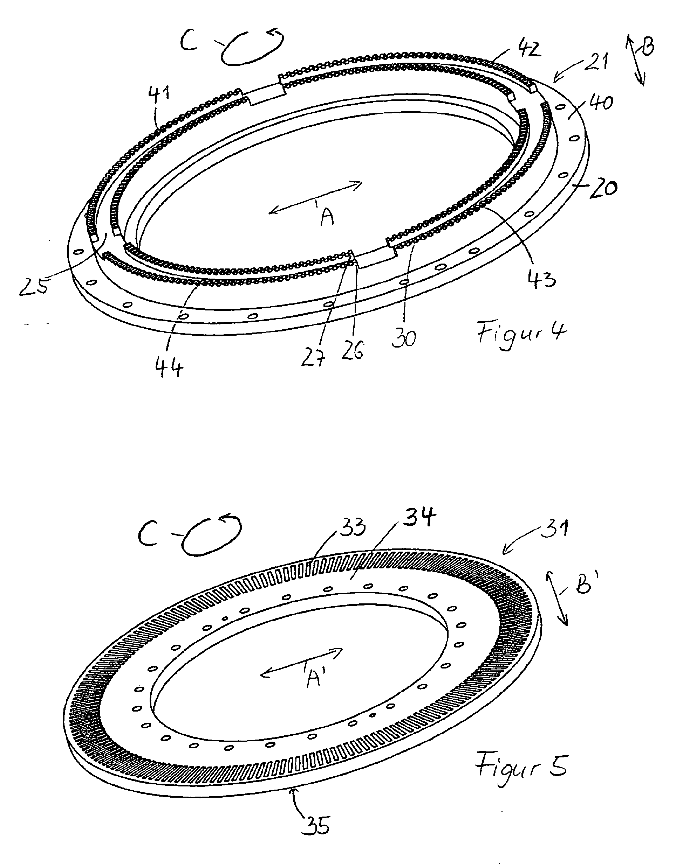

Wie beispielsweise in Fig. 4 gezeigt, ist eine Vielzahl magnetisch aktiver Elemente des Stators 21, jeweils zusammengefasst zu Ringsegmenten 41, 42, 43, 44, auf einer Stirnfläche 40 des Stators 21 angeordnet.

Wie es weiter in Fig. 4 gezeigt ist, bilden die freien Enden 28, 29 der senkrechten Profilseiten 26, 27 des U-förmigen Innenprofils 25 des Stators 21 aus Fig. 1 voneinander beabstandete zahnförmige Pole 30 aus.

Dem Stator 21 ist in axialer Ausrichtung B des Stators 21 gegenüber ein magnetisch aktiver Steg 33 des Rotors 31 vorgesehen. In Abhängigkeit von der Rotation des Rotors 31 relativ zu dem Stator 21 befindet sich der Rotorsteg 33 nur in bestimmten Situationen direkt gegenüber dem magnetisch aktiven Element des Stators 21, wie es in Fig. 1 gezeigt ist.

Wie in Fig. 5 gezeigt, ist eine Vielzahl von Stegen 33 in radialer Ausrichtung A' auf einer Stirnseite 34 des Rotors 31 ringförmig angeordnet. Die Stege 33 weisen eine Länge I in radialer Ausdehnung am Rotor 31 auf, welche etwa einem Abstand b zwischen den senkrechten Profilseiten 26, 27 des U-förmigen Innenprofils 25 der magnetisch aktiven Elemente an dem Stator 21 in radialer Ausrichtung A des Stators 21 entspricht.

An dem Stator 21 ist nun jedes der Ringsegmente 41, 42, 43, 44 wenigstens eine Wicklung 50 vorgesehen.

Die magnetisch aktiven Elemente des Stators 21 und die magnetisch aktiven Stege 33 des Rotors 31 bestehen aus einem weich magnetischem Material.

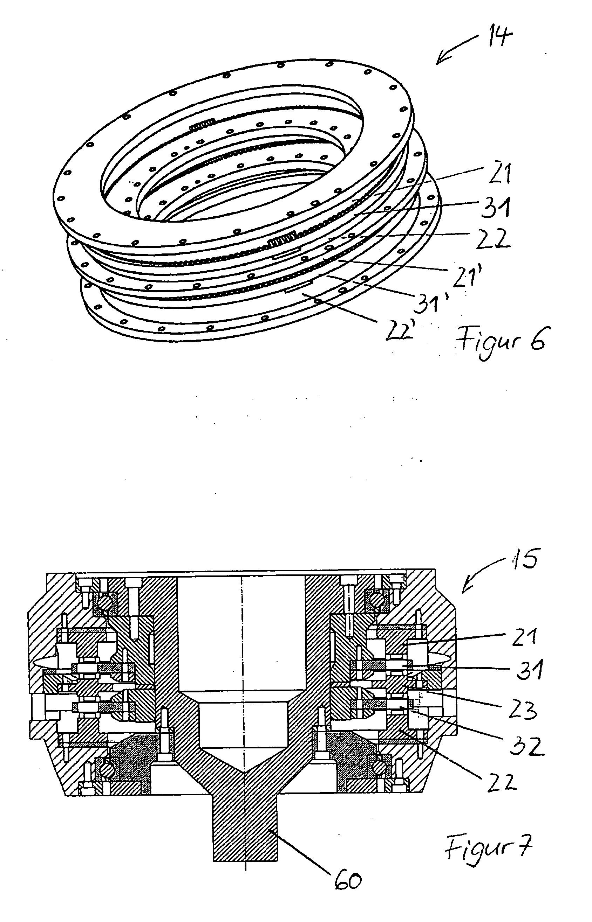

Da die Anzahl der Statorpole 30 geringer als die Anzahl der Rotorstege 33 ist, ist der Rotor 31, welcher rotationsbeweglich an einer Welle 60, die beispielsweise in Fig. 7 gezeigt ist, befestigt ist, bestrebt, wenigstens einen seiner Stege 33, in Abhängigkeit von dem bestehenden Magnetfeld, zu einem der Pole 30 des Stators 21 derart auszurichten, dass ein Statorpol 30 mit einem Rotorsteg 33 in Deckung kommt und sich somit in Richtung des geringsten magnetischen Widerstandes ausrichtet.

Um eine Drehbewegung zu erzeugen, müssen an dem Stator 21 wenigstens drei Phasen, das heißt wenigstens drei Ringsegmente 41, 42, 43 aus magnetisch aktiven Elementen, unterschiedlich bestrombar sein. Es können jedoch auch mehr als drei Phasen bzw. Ringsegmente 41, 42, 43, 44, wie in Fig. 4 gezeigt, vorgesehen werden.

Soll eine radiale Symmetrie hinsichtlich der Belastung erreicht werden, empfiehlt es sich, eine minimale Anzahl von vier Phasen bzw. verschieden bestrombaren Ringsegmenten 41, 42, 43, 44 an einen Stator 21, 22, 23, 24 vorzusehen.

Fig. 2 zeigt schematisch das Grundprinzip einer weiteren Ausführungsvariante eines erfindungsgemäßen Transversalflussmotors 12, wobei ein magnetisch aktives Element eines ersten Stators 21, ein Rotorsteg 33 und ein magnetisch aktives Element eines zweiten Stators 22 in einer geschnittenen Seitenansicht dargestellt sind. Der Rotorsteg 33 ist sandwichartig zwischen den magnetisch aktiven Elementen des ersten Stators 21 und des zweiten Stators 22 vorgesehen. Die Statoren 21, 22 sind, wie es in Fig. 4 gezeigt ist, ringförmig ausgebildet, wobei der Rotor 31 als Ring, wie in Fig. 5 gezeigt, ausgebildet und zwischen den beiden Statoren 21, 22 angeordnet ist. Hierfür weist der Rotorring nicht nur, wie in Fig. 5 gezeigt, auf seiner oberen Stirnseite 34 sondern auch auf seiner unteren Stirnseite 35 Rotorstege 33 auf, die im gleichmäßigen Abstand, radial ausgerichtet auf der jeweiligen Stirnseite 34, 35 angeordnet sind.

Die magnetisch aktiven Elemente der Statoren 21, 22 weisen jeweils ein U-förmiges Innenprofil 25 auf, wobei die senkrechten Profilseiten 26, 27 der U-förmigen Innenprofile parallel zur axialen Ausrichtung B der Statoren 21, 22 ausgerichtet sind und die freien Enden 28, 29 der senkrechten Profilseiten 26, 27 der U-förmigen Innenprofile 25 voneinander beabstandete zahnförmige Pole 30 aufweisen. An jedem der Ringsegmente 41, 42, 43, 44 der Statoren 21, 22 ist wenigstens eine Wicklung 50 vorgesehen. Typischerweise sind pro Ringsegment 41, 42, 43, 44 der Statoren 21, 22 drei bis fünf Wicklungen vorgesehen.

In Fig. 2 ist schematisch anhand der Kreise M die Ausbildung der Magnetfelder zwischen den Statoren 21, 22 und dem Rotor 31 dargestellt. Entsprechend den Kreisen M verläuft jeweils der magnetische Fluss ausgehend von dem jeweiligen Stator 21, 22 in den Rotor 31 und zurück in den jeweiligen Stator 21, 22. Durch die parallele Anordnung jeweils eines Stators 21, 22 auf beiden Seiten des Rotors 31 wird eine axial symmetrische Belastung des Rotors 31 und eine Verdopplung der in den Rotor 31 eingeleiteten Bewegungsenergie erreicht.

Fig. 3 zeigt eine weitere Ausführungsvariante eines erfindungsgemäßen Transversalflussmotors 13. Der Transversalflussmotor 13 weist eine Stapelanordnung aus mehreren sandwichartigen Stator-Rotor-Stator-Anordnungen wie in Fig. 2 auf. Pro Stapelebene ist somit eine Anordnung aus jeweils zwei Statoren 21, 22; 21', 22'; 21", 22" vorgesehen, zwischen welchen jeweils ein Rotor 31, 31', 31" angeordnet ist. Dabei steht jeweils eine Stirnseite 40 eines Stators 21, 22; 21', 22'; 21", 22" einer Stirnseite 34 bzw. 35 eines Rotors 31, 31', 31" gegenüber. Darüber hinaus sind die magnetisch aktiven Elemente der Statoren 21, 22; 21', 22'; 21", 22" mit einem U-förmigen Innenprofil 25 derart ausgebildet, dass die senkrechten Profilseiten 26, 27 der U-förmigen Innenprofile parallel zur axialen Ausrichtung B der Statoren 21, 22; 21', 22'; 21", 22" und axial in Richtung des Rotors 31, 31', 31" ausgerichtet sind. Die beidseitig der Rotoren 31, 31', 31" angeordneten Statoren 21, 22; 21', 22'; 21", 22" weisen an den freien Enden 28, 29 der U-förmigen Innenprofile 25 voneinander beabstandete zahnförmige Pole 30 auf.

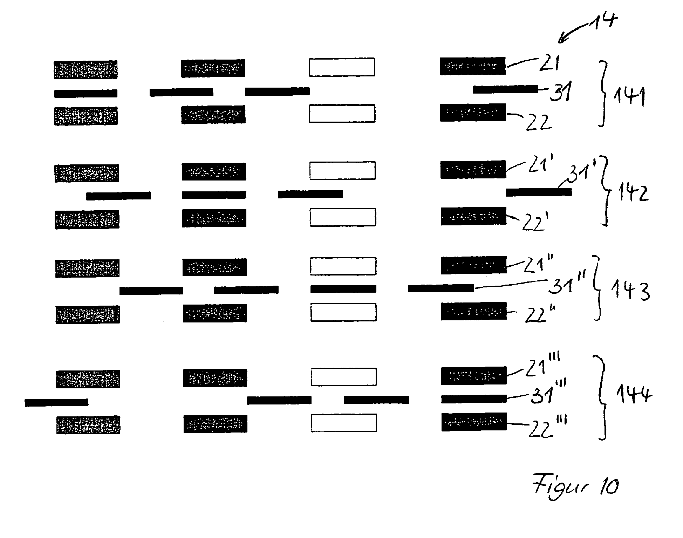

Durch diese Form der Anordnung aus gestapelten Sandwichanordnungen von Statorscheiben und Rotorscheiben ist es möglich, den Transversalflussmotor 13 derart zu bestromen, dass die Stapelebenen sequentiell bestromt werden. Auf diese Weise kann eine Drehmomenterhöhung, eine Verbesserung der Positionierbarkeit, ein besserer Gleichlauf und eine Verringerung des Maximalstroms trotz proportionalem Leistungsanstieg erreicht werden. Eine Möglichkeit einer geeigneten Bestromung des Transversalflussmotors 13 ist in Fig. 10 näher erläutert.

Fig. 4 zeigt schematisch einen Stator 21, auf welchem magnetisch aktive Elemente in Form von vier Ringsegmenten 41, 42, 43, 44 vorgesehen sind. Die Ringsegmente 41, 42, 43, 44 sind auf einer Stirnseite 40 des Stators 21 mit dazwischen vorgesehenen pollosen Zwischenräumen angeordnet und weisen in ihren Querschnitten jeweils U-förmige Innenprofile 25, wie in den Fig. 1 bis 3 gezeigt, auf. An den freien Enden 28, 29 der senkrechten Profilseiten 26, 27 der U-förmigen Innenprofile 25 sind jeweils zahnartig ausgebildete Pole 30 vorgesehen.

Werden, wie in Fig. 4 gezeigt, vier Ringsegmente auf dem Stator 21 angeordnet, kann grundsätzlich jedes dieser Ringsegmente separat bestromt werden. Es ist jedoch besonders günstig, wenn die Ringsegmente 41, 42, 43, 44 mit einer Phasenverschiebung von 180° bestromt werden, um hierdurch zwei Phasen zu erzeugen, wobei jeweils gegenüberliegende Ringsegmente 41, 43, bzw. 42, 44 gleich bestromt sind. Somit kann eine radial symmetrische Belastung des Rotors 31 erzielt werden.

Fig. 5 zeigt schematisch einen ringförmigen Rotor 31, auf dessen Stirnseite 34 eine Vielzahl von Rotorstegen 33 vorgesehen ist, die sich jeweils in radialer Ausdehnung A' des Rotors 31 auf diesen gleichmäßigen Abstand voneinander erstrecken. Wird eine Anordnung, wie in Fig. 1 gezeigt, verwendet, so sind die Rotorstege 33 auf nur einer Stirnseite 34 des Rotors 31 angeordnet. Bei Transversalflussmotoren 12, 13, wie in den Fig. 2 und 3 gezeigt, sind Rotorstege 33 sowohl auf der oberen als auch der unteren Stirnseite des Rotors 31 radial symmetrisch angeordnet.

Fig. 6 zeigt schematisch eine Stapelanordnung aus zwei sandwichartig aufgebauten Stator-Rotor-Stator-Anordnungen gemäß Fig. 2 bzw. Fig. 3 im Querschnitt. Wie in Fig. 6 gezeigt, sind pro Sandwichanordnung jeweils zwei Statoren 21, 22; 21', 22' und ein Rotor 31, 31' parallel zueinander vorgesehen.

Fig. 7 zeigt schematisch die sandwichartig aufgebaute Stator-Rotor-Stator-Rotor-Stator-Anordnung in einer geschnittenen Seitenansicht. Hier sind die Kräfte von den Rotoren 31, 32 auf eine Welle 60 übertragbar sind, um somit einen Antrieb zu gewährleisten.

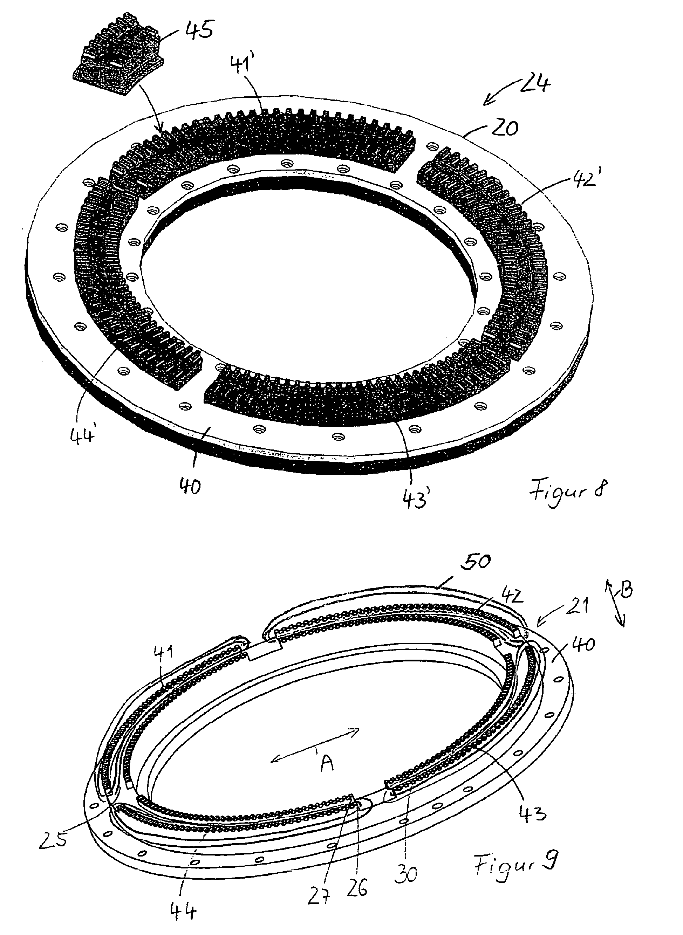

Fig. 8 zeigt schematisch einen Stator 24 gemäß einer weiteren Ausführungsform des erfindungsgemäßen Transversalflussmotors 13, wobei der Stator 24 Ringsegmente 41', 42', 43', 44' aufweist, die aus Einzelsegmenten 45 zusammengesetzt sind. Die Einzelsegmente 45 können technologisch einfacher als die Ringsegmente 41, 42, 43, 44 aus den oben beschriebenen Ausführungsformen hergestellt werden, wobei diese nur geeignet zu einem jeweiligen Ringsegment 41', 42', 43', 44' zusammengesetzt werden müssen. Somit ist es möglich, beispielsweise nur die Ringsegmente 41, 42, 43, 44 bzw. die Einzelsegmente 45 der Ringsegmente 41', 42', 43', 44' aus einem weichmagnetischen Material auszubilden, während der Träger 20, auf welchem die Ringsegmente 41, 42, 43, 44 bzw. 41', 42', 43', 44' vorgesehen sind, aus einem anderen Material bestehen kann.

Beispielsweise kann der Träger 20 aus einem glasfaserverstärkten Faserverbundwerkstoff ausgebildet sein, der sich dadurch auszeichnet, dass er leicht und stabil ist und darüber hinaus eine glatte Oberfläche zur Verfügung stellen kann. Entsprechend ergibt sich ein geringes Gewicht bei hoher Haltbarkeit des Stators 24 und durch die glatte Oberfläche eine Geräuscharmut dieses Stators 24.

Fig. 9 zeigt schematisch einen Stator 21 gemäß einer weiteren Ausführungsform des erfindungsgemäßen Transversalflussmotors, wobei als Wicklung für die einzelnen Ringsegmente 41,42,43,44 wenigstens eine innen hohle Wicklung 50 pro Ringsegment 41, 42, 43, 44 eingesetzt wurde. Die innen hohle Wicklung 50 kann beispielsweise durch ein Kupferrohr realisiert werden.

Durch die innen hohle Wicklung 50 kann eine Kühlflüssigkeit geleitet werden, sodass der erfindungsgemäße Transversalflussmotor während seines Betriebes gekühlt werden kann.

Fig. 10 zeigt schematisch eine Ausführungsform eines erfindungsgemäßen Antriebsverfahrens für einen Transversalflussmotor 13, wie er beispielsweise in Fig. 3 schematisch gezeigt ist.

Hierfür sind in Fig. 10 schematisch die Positionen der Rotorstege 33 zu den Statorelementen 21, 22, 23, 24 für jede Phase in jeder der vier Hauptrotationslagen am Beispiel eines Motors mit vier Phasen und zwei Gruppen gezeigt.

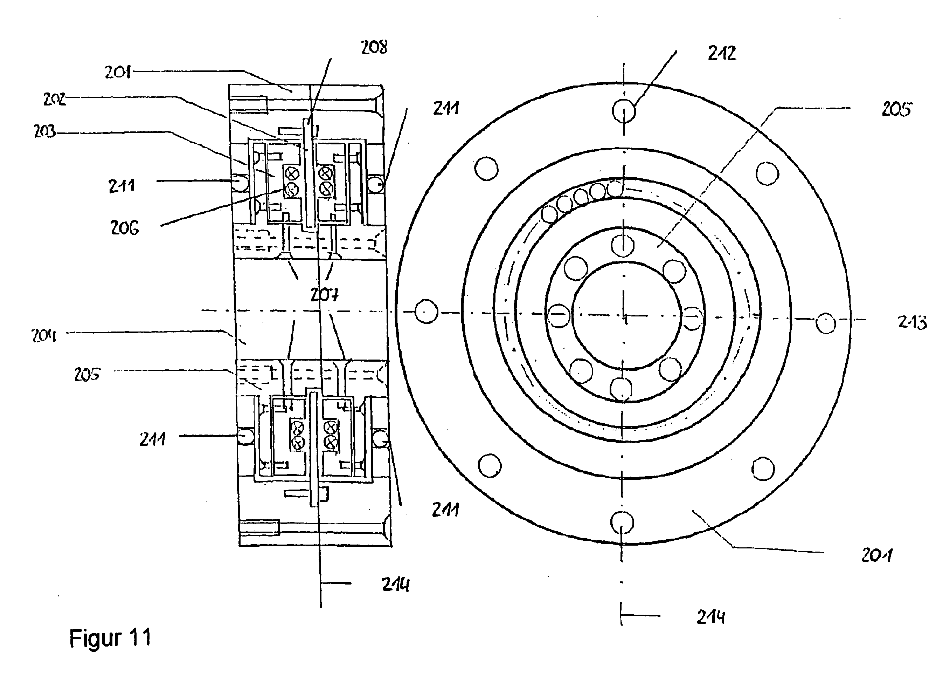

Fig. 11 zeigt schematisch den Aufbau des erfindungsgemäßen Transversalflussmotors in der Ausführung als Außenläufermotor. Die Statorelemente 203 sind dabei auf einem Statorträger 205 angeordnet und mit einem Träger oder einer Achse 204 durch geeignete Verbindungselemente 207 fest verbunden. Die Anschlüsse für die Leiterwicklung 206 können dabei auf einfache Weise über die Achse 204 nach außen geführt werden. Der Rotor 202 wird im äußeren Bereich beispielsweise über die Bohrungen 212 einer Flanschverbindung mit einem rotierenden Motorkäfig 201 oder einer Motorhülle bzw. einem anderen geeigneten, außen rotierenden Bauteil, beispielsweise einer Walze oder einer Felge, verbunden. Lager 211 fixieren dabei die axiale und radiale Position von Rotor 202 und Stator 203, 205 zueinander, ohne dabei die beabsichtigte Rotation um die Rotationsachse 213 zu behindern.

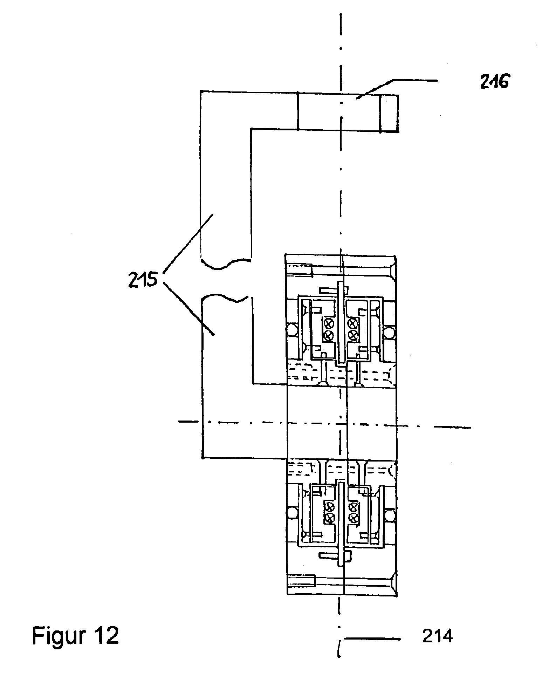

Fig. 12 zeigt eine Ausführungsvariante des erfindungsgemäßen Transversalflussmotors mit einer Vorrichtung zur Aufhängung und Lagerung. Durch einen U-förmigen Träger 215 besteht die Möglichkeit, den gesamten Motor im Lager 216 um eine Rotationsachse 214 zu bewegen. Dies bietet beispielsweise beim Einsatz als Radnabenantrieb die Möglichkeit einer Veränderung des Lenkwinkels um 180°.

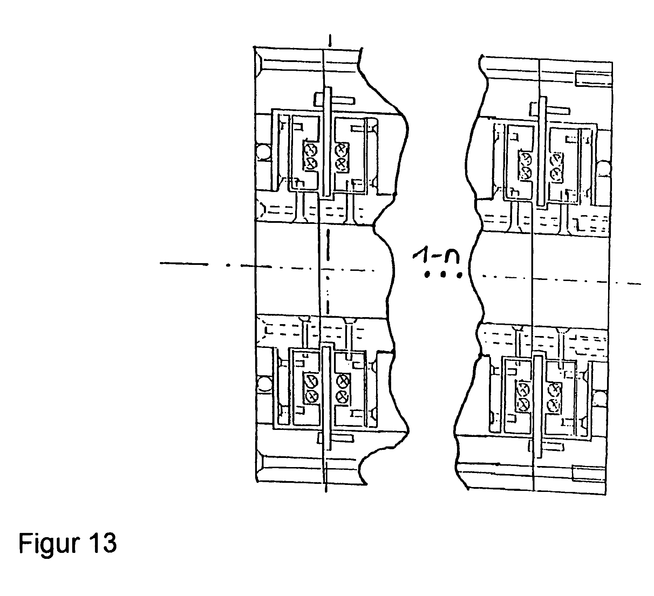

Fig. 13 zeigt die Ausführung des erfindungsgemäßen Transversalflussmotors in einer aus mehreren Stapelebenen bestehenden Variante im Schnittbild.

## Patentansprüche

1. Transversalflussmotor (11, 12, 13, 14, 15) mit wenigstens einem Stator (21, 22, 23, 24, 203, 205) und wenigstens einem Rotor (31, 32, 202) in axialer Ausrichtung gegenüber dem Stator wobei magnetisch aktive Elemente des Stators (21, 22, 23, 24, 203, 205) ringförmig und mit einem U-förmigen Innenprofil (25) an dem Stator (21, 22, 23, 24, 203, 205) ausgebildet sind, senkrechte Profilseiten (26, 27) des U-förmigen Innenprofils (25) parallel zur axialen Ausrichtung (B) des Stators (21, 22, 23, 24, 203, 205) ausgerichtet sind, freie Enden (28, 29) der senkrechten Profilseiten (26, 27) des U-förmigen Innenprofils (25) voneinander beabstandete Pole (30) aufweisen, der Stator (203, 205) mit einem fest stehenden Träger oder einer fest stehenden Achse (204) verbunden ist, und
der Rotor (31, 32, 202) scheibenförmig ausgebildet, ist
**dadurch gekennzeichnet, dass**
der rotor mit einer rotierbaren radial auβen liegenden Motorhülle (201) verbunden ist, wobei der Rotor (31, 32, 202) magnetisch aktive Stege (33) aus weichmagnetischem Material aufweist, die ringförmig in radialer Ausrichtung (A) auf wenigstens einer Stirnfläche (34, 35) des Rotors (31, 32, 202) vorgesehen sind.

2. Transversalflussmotor nach Anspruch 1, **dadurch gekennzeichnet, dass** die senkrechten Profilseiten (26, 27) des U-förmigen Innenprofils (25) in radialer Ausrichtung (A) des Stators (21, 22, 23, 24, 203, 205) einen Abstand (b) aufweisen, der etwa der Länge (I) der radialen Ausdehnung der Stege (33) am Rotor (31, 32, 202) entspricht.

3. Transversalflussmotor nach einem der Ansprüche 1 oder 2, **dadurch gekennzeichnet, dass** der Stator (21, 22, 23, 24, 203, 205) drei, vier oder mehr gleichmäßig am Stator (21, 22, 23, 24, 203, 205) angeordnete und voneinander gleichmäßig beabstandete, als Ringsegmente (41, 42, 43, 44) ausgebildete magnetisch aktive Elemente aufweist.

4. Transversalflussmotor nach Anspruch 3, **dadurch gekennzeichnet, dass** die Pole (30) zahnartig ausgebildet sind, wobei jedem Pol (30) auf einer senkrechten Profil-seite (26) eines Ringsegmentes (41, 42, 43, 44) ein Pol (30) auf der anderen senkrechten Profilseite (27) des Ringsegmentes (41, 42, 43, 44) in radialer Ausrichtung (A) des Stators (21, 22, 23, 24, 203, 205) gegenüber ist.

5. Transversalflussmotor nach einem der Ansprüche 3 oder 4, **dadurch gekennzeichnet, dass** der Transversalflussmotor (12, 13, 14, 15) sandwichartig ausgebildet ist, wobei ein Rotor (31, 32) zwischen einem ersten und einem zweiten Stator (21, 22; 21, 23; 23, 22) derart angeordnet ist, dass jeder der Stirnflächen (34, 35) des Rotors (31, 32) eine Statorstirnfläche (40) mit davon axial, in Richtung des Rotors (31, 32) hervor ragenden Ringsegmenten (41, 42, 43, 44) gegenüber ist.

6. Transversalflussmotor nach Anspruch 5, **dadurch gekennzeichnet, dass** auf dem ersten Stator (21) und auf dem zweiten Stator (22) jeweils vier gleiche Ringsegmente (41, 42, 43, 44) vorgesehen sind, wobei die Statoren (21, 22) so angeordnet sind, dass sich die Ringsegmente (41, 42, 43, 44) jeweils gegenüber sind und wobei die Ringsegmente (41, 42, 43, 44) so mit einer Phasenverschiebung von 180° bestrombar sind, dass von jeweils gegenüberliegenden Ringsegmenten (41, 42, 43, 44) der Statoren (21, 22) eines bestromt und eines nicht bestromt ist.

7. Transversalflussmotor nach einem der Ansprüche 3 bis 6, **dadurch gekennzeichnet, dass** der Stator (24) einen Träger (20) aus einem nicht magnetischen Material aufweist und die Ringsegmente (41, 42, 43, 44) aus weichmagnetischem Material ausgebildet sind.

8. Transversalflussmotor nach einem der vorhergehenden Ansprüche, **dadurch gekennzeichnet, dass** der Stator (21, 22, 23, 24, 203, 205) wenigstens eine innen hohle Wicklung (50) aufweist.

9. Transversalflussmotor nach einem der vorhergehenden Ansprüche, **dadurch gekennzeichnet, dass** der Stator (203, 205) mit einem U-förmigen Träger (215) verbunden ist

10. Transversalflussmotor nach einem der vorhergehenden Ansprüche, **dadurch gekennzeichnet, dass** der Statorträger (205), die Stator-Ringsegmente (41, 42. 43, 44) und die Leiterwicklung (206) zu einem Statorblock zusammengefasst sind.

11. Antriebsverfahren nach dem Transversalflussprinzip, wobei magnetisch aktive Elemente wenigstens eines Stators (21, 22, 23, 24, 203, 205), die mit einem U-förmigen Innenprofil (25) an dem Stator (21, 22, 23, 24, 203, 205) ausgebildet sind, wobei senkrechte Profilseiten (26, 27) des U-förmigen Innenprofils (25) parallel zur axialen Ausrichtung (B) des Stators (21, 22, 23, 24, 203, 205) ausgerichtet sind und freie Enden (28, 29) der senkrechten Profilseiten (26, 27) des U-förmigen Innenprofils (25) voneinander beabstandete Pole (30) aufweisen, bestromt werden und mit wenigstens einem Rotor (31, 32, 202) in axialer Richtung gegenüber dem Stator zusammenwirken, um den Rotor (31, 32, 202) in Rotation zu versetzen, wobei bei jeder Bestromung der Rotor (31, 32, 202) in Relation zu dem Stator (21, 22, 23, 24, 203, 205) um einen Pol (30) in Rotationsrichtung (C) bewegt wird.
**dadurch gekennzeichnet,**
**dass** die magnetisch aktiven Elemente an dem Stator (21, 22, 23, 24, 203, 205) mit magnetisch aktiven und ringförmig in radialer Ausrichtung (A) auf wenigstens einer Stirnfläche (34, 35) wenigstens eines scheibenförmigen, mit einer rotierbaren radial auβen liegenden Motorhülle verbundenen Rotors (31, 32, 202) vorgesehenen Stegen (33) aus weichmagnetischem Material zusammenwirken.

12. Antriebsverfahren nach Anspruch 11, **dadurch gekennzeichnet, dass** die magnetisch aktiven Elemente an dem Stator (21, 22, 23, 24, 203, 205) wenigstens drei Ringe oder Ringsegmente (41, 42, 43, 44) sind, die unterschiedlich bestromt werden, wobei die senkrechten Profilseiten (26, 27) des U-förmigen Innenprofils (25) der Ringsegmente (41 ,42, 43, 44) parallel zur axialen Ausrichtung (B) des Stators (21, 22, 23, 24, 203, 205) ausgerichtet sind und freie Enden (28, 29) der senkrechten Profilseiten (26, 27) des U-förmigen Innenprofils (25) voneinander beabstandete Pole (30) aufweisen, und wobei bei jeder Bestromung der Rotor (31, 32, 202) in Relation zu dem Stator (21, 22, 23, 24, 203, 205) um einen Pol (30) in Rotationsrichtung (C) bewegt wird.

13. Antriebsverfahren nach Anspruch 11 oder 12, **dadurch gekennzeichnet, dass** der Rotor (31, 32) sandwichartig zwischen einem ersten Stator (21, 23, 203) mit vier Ringsegmenten (41, 42, 43, 44) und einem zweiten Stator (22, 24, 205) mit vier Ringsegmenten (41, 42, 43, 44) angeordnet wird, die Ringsegmente des ersten und des zweiten Stators mit einer Phasenverschiebung von 180° bestromt werden und die auf den Statoren (21, 22, 23, 24, 203, 205) gegenüberliegenden Ringsegmente (41, 43, 42, 44) gleich bestromt werden.

14. Antriebsverfahren nach Anspruch 11, 12 oder 13, **dadurch gekennzeichnet, dass** mehrere sandwichartig aufgebaute Stator-Rotor-Stator-Anordnungen als Stapelanordnung (14) vorgesehen werden, wobei die Stapelebenen (141, 142, 143, 144) sequentiell mit einer Phasenverschiebung zueinander bestromt werden.

15. Antriebsverfahren nach Anspruch 11, **dadurch gekennzeichnet, dass** bei einer Anordnung (11), in der dem Rotor (31) nur ein Stator (21) gegenüber angeordnet und zugeordnet ist, der Stator (21) wenigstens an drei, gleichmäßig auf dem Stator (21) angeordneten Ringsegmenten (41, 42, 43, 44) sequentiell bestromt wird.

## Claims

1. Transverse flux motor (11, 12, 13, 14, 15) having at least one stator (21, 22, 23, 24, 203, 205) and at least one rotor (31, 32, 202) in axial alignment relative to the stator, wherein magnetically active elements of the stator (21, 22, 23, 24, 203, 205) are annular and have a U-shaped internal profile (25) on the stator (21, 22, 23, 24, 203, 205), vertical profile sides (26, 27) of the U-shaped internal profile (25) are aligned parallel to the axial alignment (B) of the stator (21, 22, 23, 24, 203, 205), free ends (28, 29) of the vertical profile sides (26, 27) of the U-shaped internal profile (25) have poles (30) which are separated from one another, and the stator (203, 205) is connected to a stationary support or to a stationary shaft (204), and
the rotor (31, 32, 202) is in the form of a disk,
**characterized in that**
the rotor is connected to a rotatable radially external motor casing (201), wherein the rotor (31, 32, 202) has magnetically active webs (33) of soft-magnetic material which are provided in the form of a ring in radial alignment (A) on at least one end surface (34, 35) of the rotor (31, 32, 202).

2. Transverse flux motor according to claim 1, **characterized in that** the vertical profile sides (26, 27) of the U-shaped internal profile (25) are separated by a distance (b) in the radial alignment (A) of the stator (21, 22, 23, 24, 203, 205), which distance (b) corresponds approximately to the length (I) of the radial extent of the webs (33) on the rotor (31, 32, 202).

3. Transverse flux motor according to either of claims 1 and 2, **characterized in that** the stator (21, 22, 23, 24, 203, 205) has three, four or more magnetically active elements which are arranged uniformly on the stator (21, 22, 23, 24, 203, 205), are separated from one another uniformly and are in the form of ring segments (41, 42, 43, 44).

4. Transverse flux motor according to claim 3, **characterized in that** the poles (30) are like teeth, with each pole (30) on one vertical profile side (26) of a ring segment (41, 42, 43, 44) being opposite one pole (30) on the other vertical profile side (27) of the ring segment (41, 42, 43, 44) in the radial alignment (A) of the stator (21, 22, 23, 24, 203, 205).

5. Transverse flux motor according to either of claims 3 and 4, **characterized in that** the transverse flux motor (12, 13, 14, 15) is designed like a sandwich, with a rotor (31, 32) being arranged between a first and a second stator (21, 22; 21, 23; 23, 22) such that each of the end surfaces (34, 35) of the rotor (31, 32) is opposite a stator end surface (40) with ring segments (41, 42, 43, 44) which project axially therefrom in the direction of the rotor (31, 32).

6. Transverse flux motor according to claim 5, **characterized in that** four identical ring segments (41, 42, 43, 44) are in each case provided on the first stator (21) and on the second stator (22), with the stators (21, 22) being arranged such that the ring segments (41, 42, 43, 44) are each opposite, and in which case current can flow through the ring segments (41, 42, 43, 44) with a phase shift of 180° such that, of the respectively opposite ring segments (41, 42, 43, 44) of the stators (21, 22), current flows through one but not the other.

7. Transverse flux motor according to one of claims 3 to 6, **characterized in that** the stator (24) has a support (20) composed of a non-magnetic material, and the ring segments (41, 42, 43, 44) are formed from soft-magnetic material.

8. Transverse flux motor according to one of the preceding claims, **characterized in that** the stator (21, 22, 23, 24, 203, 205) has at least one internally hollow winding (50).

9. Transverse flux motor according to one of the preceding claims, **characterized in that** the stator (203, 205) is connected to a U-shaped support (215).

10. Transverse flux motor according to one of the preceding claims, **characterized in that** the stator support (205), the stator ring segments (41, 42, 43, 44) and the conductor winding (206) are combined to form a stator block.

11. Drive method based on the transverse flux principle, wherein current flows through magnetically active elements of at least one stator (21, 22, 23, 24, 203, 205) which have a U-shaped internal profile (25) on the stator (21, 22, 23, 24, 203, 205), wherein vertical profile sides (26, 27) of the U-shaped internal profile (25) are aligned parallel to the axial alignment (B) of the stator (21, 22, 23, 24, 203, 205), and free ends (28, 29) of the vertical profile sides (26, 27) of the U-shaped internal profile (25) have poles (30) which are separated from one another, and said magnetically active elements interact with at least one rotor (31, 32, 202) in an axial direction relative to the stator in order to cause the rotor (31, 32, 202) to rotate, wherein the rotor (31, 32, 202) is moved around a pole (30) in the rotation direction (C) in relation to the stator (21, 22, 23, 24, 203, 205) when any current flows through,
**characterized in that**
the magnetically active elements on the stator (21, 22, 23, 24, 203, 205) interact with magnetically active webs (33) of soft-magnetic material which are provided in the form of a ring in radial alignment (A) on at least one end surface (34, 35) of at least one rotor (31, 32, 202) which is in the form of a disc and is connected to a rotatable radially external motor casing.

12. Drive method according to claim 11, **characterized in that** the magnetically active elements on the stator (21, 22, 23, 24, 203, 205) are at least three rings or ring segments (41, 42, 43, 44) through which current flows differently, with the vertical profile sides (26, 27) of the U-shaped internal profile (25) of the ring segments (41, 42, 43, 44) being aligned parallel to the axial alignment (B) of the stator (21, 22, 23, 24, 203, 205), and with free ends (28, 29) of the vertical profile sides (26, 27) of the U-shaped internal profile (25) having poles (30) which are separated from one another, and with the rotor (31, 32, 202) being moved around a pole (30) in the rotation direction (C) in relation to the stator (21, 22, 23, 24, 203, 205) when any current flows through.

13. Drive method according to claim 11 or 12, **characterized in that** the rotor (31, 32) is arranged like a sandwich between a first stator (21, 23, 203) having four ring segments (41, 42, 43, 44) and a second stator (22, 24, 205) having four ring segments (41, 42, 43, 44), current flows through the ring segments of the first and of the second stator with a phase shift of 180°, and current flows in the same way through the ring segments (41, 43, 42, 44) which are opposite on the stators (21, 22, 23, 24, 203, 205).

14. Drive method according to claim 11, 12 or 13, **characterized in that** a plurality of stator-rotor-stator arrangements which are formed like a sandwich are provided as a stack arrangement (14), with current flowing through the stack levels (141, 142, 143, 144) sequentially with a phase shift with respect to one another.

15. Drive method according to claim 11, **characterized in that,** in the case of an arrangement (11) in which only one stator (21) is arranged opposite the rotor (31) and is associated with it, current flows sequentially through the stator (21) at least on three ring segments (41, 42, 43, 44) which are arranged uniformly on the stator (21).

## Revendications

1. Moteur à flux transversal (11, 12, 13, 14, 15) comprenant au moins un stator (21, 22, 23, 24, 203, 205) et au moins un rotor (31, 32, 202) orienté axialement par rapport au stator, des éléments magnétiquement actifs du stator (21, 22, 23, 24, 203, 205) étant réalisés sous forme annulaire et avec un profilé interne en forme de U (25) sur le stator (21, 22, 23, 24, 203, 205), des côtés profilés verticaux (26, 27) du profilé interne en forme de U (25) étant orientés parallèlement à l'orientation axiale (B) du stator (21, 22, 23, 24, 203, 205), des extrémités libres (28, 29) des côtés profilés verticaux (26, 27) du profilé interne en forme de U (25) présentant des pôles (30) espacés les uns des autres et le stator (203, 205) étant assemblé à un support fixe ou à un axe fixe (204), et
le rotor (31, 32, 202) étant réalisé en forme de disque,
**caractérisé en ce que**
le rotor est assemblé à une enveloppe de moteur (201) rotative située radialement à l'extérieur, le rotor (31, 32, 202) présentant des nervures (33) magnétiquement actives en matériau magnétique doux, lesquelles sont prévues sous forme annulaire dans l'orientation radiale (A) sur au moins une face frontale (34, 35) du rotor (31, 32, 202).

2. Moteur à flux transversal selon la revendication 1, **caractérisé en ce que** les côtés profilés verticaux (26, 27) du profilé interne en forme de U (25) présentent, dans l'orientation radiale (A) du stator (21, 22, 23, 24, 203, 205), un espacement (b) qui correspond approximativement à la longueur (I) de l'étendue radiale des nervures (33) sur le rotor (31, 32, 202).

3. Moteur à flux transversal selon l'une quelconque des revendications 1 et 2, **caractérisé en ce que** le stator (21, 22, 23, 24, 203, 205) présente trois, quatre ou plus de quatre éléments magnétiquement actifs disposés uniformément sur le stator (21, 22, 23, 24, 203, 205) et équidistants les uns des autres, réalisés sous forme de segments annulaires (41, 42, 43, 44).

4. Moteur à flux transversal selon la revendication 3, **caractérisé en ce que** les pôles (30) sont réalisés en forme de dents, chaque pôle (30) sur un côté profilé vertical (26) d'un segment annulaire (41, 42, 43, 44) étant opposé à un pôle (30) sur l'autre côté profilé vertical (27) du segment annulaire (41, 42, 43, 44) dans l'orientation radiale (A) du stator (21, 22, 23, 24, 203, 205).

5. Moteur à flux transversal selon l'une quelconque des revendications 3 ou 4, **caractérisé en ce que** le moteur à flux transversal (12, 13, 14, 15) est réalisé en sandwich, un rotor (31, 32) étant disposé entre un premier et un deuxième stator (21, 22; 21, 23; 23, 22) de telle sorte que chacune des faces frontales (34, 35) du rotor (31, 32) soit opposée à une face frontale de stator (40) avec des segments annulaires (41, 42, 43, 44) saillant radialement depuis celle-ci dans la direction du rotor (31, 32).

6. Moteur à flux transversal selon la revendication 5, **caractérisé en ce que** quatre segments annulaires identiques (41, 42, 43, 44) sont à chaque fois prévus sur le premier stator (21) et sur le deuxième stator (22), les stators (21, 22) étant disposés de telle sorte que les segments annulaires (41, 42, 43, 44) soient à chaque fois opposés et les segments annulaires (41, 42, 43, 44) pouvant être alimentés en courant avec un décalage de phase de 180° de telle sorte que pour des segments annulaires (41, 42, 43, 44) opposés des stators (21, 22), l'un soit alimenté et l'autre pas.

7. Moteur à flux transversal selon l'une quelconque des revendications 3 à 6, **caractérisé en ce que** le stator (24) présente un support (20) constitué d'un matériau non magnétique et les segments annulaires (41, 42, 43, 44) sont réalisés en matériau magnétique doux.

8. Moteur à flux transversal selon l'une quelconque des revendications précédentes, **caractérisé en ce que** le stator (21, 22, 23, 24, 203, 205) présente au moins un enroulement creux interne (50).

9. Moteur à flux transversal selon l'une quelconque des revendications précédentes, **caractérisé en ce que** le stator (203, 205) est assemblé à un support en forme de U (215).

10. Moteur à flux transversal selon l'une quelconque des revendications précédentes, **caractérisé en ce que** le support de stator (205), les segments annulaires de stator (41, 42, 43, 44) et l'enroulement conducteur (206) sont assemblés en un bloc statorique.

11. Procédé d'entraînement selon le principe du flux transversal, dans lequel des éléments magnétiquement actifs d'au moins un stator (21, 22, 23, 24, 203, 205), qui sont réalisés avec un profilé interne en forme de U (25) sur le stator (21, 22, 23, 24, 203, 205), sont parcourus par un courant, des côtés profilés verticaux (26, 27) du profilé interne en forme de U (25) étant orientés parallèlement à l'orientation axiale (B) du stator (21, 22, 23, 24, 203, 205) et des extrémités libres (28, 29) des côtés profilés verticaux (26, 27) du profilé interne en forme de U (25) présentant des pôles (30) espacés les uns des autres, et les éléments magnétiquement actifs coopérant avec au moins un rotor (31, 32, 202) dans la direction axiale par rapport au stator, afin de mettre en rotation le rotor (31, 32, 202), et à chaque alimentation en courant, le rotor (31, 32, 202) étant déplacé d'un pôle (30) dans le sens de rotation (C) par rapport au stator (21, 22, 23, 24, 203, 205),
**caractérisé en ce que**
les éléments magnétiquement actifs sur le stator (21, 22, 23, 24, 203, 205) coopèrent avec des nervures (33) en matériau magnétique doux, magnétiquement actives, prévues sous forme annulaire dans l'orientation radiale (A) sur au moins une face frontale (34, 35) d'au moins un rotor (31, 32, 202) en forme de disque, assemblé à une enveloppe de moteur rotative, située radialement à l'extérieur.

12. Procédé d'entraînement selon la revendication 11, **caractérisé en ce que** les éléments magnétiquement actifs sur le stator (21, 22, 23, 24, 203, 205) sont au moins trois bagues ou trois segments annulaires (41, 42, 43, 44) qui sont alimentés en courant différemment, les côtés profilés verticaux (26, 27) du profilé interne en forme de U (25) des segments annulaires (41, 42, 43, 44) étant orientés parallèlement par rapport à l'orientation axiale (B) du stator (21, 22, 23, 24, 203, 205) et des extrémités libres (28, 29) des côtés profilés verticaux (26, 27) du profilé interne en forme de U (25) présentant des pôles (30) espacés les uns des autres, et à chaque alimentation en courant, le rotor (31, 32, 202) étant déplacé d'un pôle (30) dans le sens de rotation (C) par rapport au stator (21, 22, 23, 24, 203, 205).

13. Procédé d'entraînement selon la revendication 11 ou 12, **caractérisé en ce que** le rotor (31, 32) est disposé en sandwich entre un premier stator (21, 23, 203) comprenant quatre segments annulaires (41, 42, 43, 44) et un deuxième stator (22, 24, 205) comprenant quatre segments annulaires (41, 42, 43, 44), les segments annulaires du premier et du deuxième stator sont alimentés en courant avec un décalage de phase de 180°, et les segments annulaires (41, 42, 43, 44) en regard sur les stators (21, 22, 23, 24, 203, 205) étant alimentés en courant de manière identique.

14. Procédé d'entraînement selon la revendication 11, 12 ou 13, **caractérisé en ce que** plusieurs agencements stator-rotor-stator montés en sandwich sont prévus en tant qu'agencement empilé (14), les plans d'empilement (141, 142, 143, 144) étant alimentés en courant de manière séquentielle avec un décalage de phase les uns par rapport aux autres.

15. Procédé d'entraînement selon la revendication 11, **caractérisé en ce que** dans un agencement (11) dans lequel seulement un stator (21) est disposé en regard du rotor (31) et est associé à celui-ci, le stator (21) est alimenté en courant séquentiellement au niveau d'au moins trois segments annulaires (41, 42, 43, 44) répartis uniformément sur le stator (21).
